(19) **Europäisches Patentamt**
**European Patent Office**
**Office européen des brevets**

(11) **EP 3 952 102 B1**

(12) **EUROPÄISCHE PATENTSCHRIFT**

(45) Veröffentlichungstag und Bekanntmachung des Hinweises auf die Patenterteilung:
**05.03.2025 Patentblatt 2025/10**

(21) Anmeldenummer: **20189878.0**

(22) Anmeldetag: **06.08.2020**

(51) Internationale Patentklassifikation (IPC):
*H02P 29/60* (2016.01)    *H02P 25/022* (2016.01)
*H02P 23/00* (2016.01)    *H02P 25/08* (2016.01)

(52) Gemeinsame Patentklassifikation (CPC):
**H02P 25/022; H02P 23/0031; H02P 25/08; H02P 29/60**

(54) **ÜBERLASTSICHERE MOTORREGELUNG**

OVERLOAD-PROOF MOTOR CONTROL

RÉGLAGE DU MOTEUR PROTÉGÉ CONTRE LES SURCHARGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.02.2022 Patentblatt 2022/06**

(73) Patentinhaber: **Siemens Aktiengesellschaft**
**80333 München (DE)**

(72) Erfinder:
• **Nemeth-Csoka, Mihaly**
**91056 Erlangen (DE)**

• **Wieser, Norbert**
**91322 Gräfenberg (DE)**
• **Wolfsberger, Stefan**
**91058 Erlangen (DE)**

(74) Vertreter: **Siemens Patent Attorneys**
**Postfach 22 16 34**
**80506 München (DE)**

(56) Entgegenhaltungen:
**EP-A1- 1 935 228      EP-A1- 2 438 808**
**WO-A2-2013/098102   US-A1- 2011 279 074**

**Beschreibung**

Die Erfindung betrifft ein Verfahren zur Regelung einer elektrischen Maschine, wobei zur Verhinderung einer thermischen Überlastung der elektrischen Maschine der Motorstrom in Abhängigkeit von der Motordrehzahl der elektrischen Maschine begrenzt wird. Ferner betrifft die Erfindung einen Stromrichter sowie einen elektrischen Antrieb.

Elektrische Antriebe, die einen Stromrichter und eine elektrische Maschine aufweisen, werden auf ihren Anwendungsfall elektrisch und thermisch ausgelegt. Das bedeutet, dass die elektrischen Komponenten von Stromrichter und elektrischer Maschine auf die auftretende Belastung derart ausgelegt werden, dass sie elektrisch und thermisch nicht überlastet werden. Dabei entstehen elektrische Verluste sowohl im Stromrichter als auch in der elektrischen Maschine. Im Falle eine Überlastung überschreiten Temperaturen im Innern des Stromrichters oder der elektrischen Maschine zulässige Grenzwerte. Dadurch beschleunigt sich die Alterung oder die elektrische Maschine wird derart geschädigt, dass sie ausfällt.

Die vorliegende Anmeldung befasst sich mit dem thermischen Schutz der elektrischen Maschine.

Der Begriff der elektrischen Maschine umfasst sowohl Motoren als auch Generatoren. Der Einfachheit halber sind im Folgenden Begriffe, die sich auf den Motor beziehen, wie beispielsweise Motorstrom oder Motordrehzahl, allgemein auf die elektrische Maschine zu verstehen und nicht allein auf den motorischen Betrieb beschränkt.

Die Charakteristik eines Antriebs bezüglich Drehmoment und Drehzahl wird üblicherweise in einem Drehzahl-/Drehmomentkennlinienfeld angegeben. Dieses zeigt das maximal zulässige Moment über der Drehzahl. Darüber hinaus sind oftmals auch zulässige Werte für unterschiedliche Betriebsarten angegeben. Der erlaubte Betriebsbereich bei unterschiedlichen Randbedingungen der elektrischen Maschine wird daher typischerweise durch das Drehzahl-/Drehmomentkennlinienfeld angegeben.

Mit Hilfe eines thermischen Motormodells wird sichergestellt, dass die Motorbelastung nicht zu einer unzulässig hohen Motortemperatur führt. Dazu können beispielsweise Temperatursensoren im Motor zum Einsatz kommen.

Aus der EP 1 935 228 A1 ist eine Antriebsanordnung für ein portables Arbeitsgerät bekannt. Darin wird eine Antriebsanordnung für ein handgeführtes Arbeitsgerät für den Landschafts-, Forst- und Gartenbau vorgeschlagen, mit einem Elektromotor, einem Speicher für elektrische Energie, und einer Steuervorrichtung für den aus dem Energiespeicher gespeisten Elektromotor, wobei der Elektromotor eine bestimmte, insbesondere lineare Kennlinie zwischen dem von dem Elektromotor aufgenommenen elektrischen Strom und der Drehzahl einer Abtriebswelle des Elektromotors besitzt, wobei die Steuervorrichtung Strombegrenzungsmittel aufweist, die den durch den Elektromotor fließenden Strom auf einen Maximalwert begrenzen, um den Elektromotor vor einer Überlastung zu schützen. Dabei begrenzt die Steuervorrichtung die Stromaufnahme des Elektromotors in einem Bereich niedriger Drehzahlen in Abhängigkeit von der Drehzahl auf Werte, die deutlich kleiner sind als die Kennlinienwerte, die sich für diese Drehzahlen aus der Kennlinie des Elektromotors ergeben.

Aus der WO 2013/098102 A2 sind ein Verfahren zum Betreiben einer elektrischen Maschine und eine elektrische Maschine bekannt. Diese Offenbarung betrifft ein Verfahren zum Betreiben einer elektrischen Maschine, insbesondere eines Kraftfahrzeugs, wobei die elektrische Maschine in einem durch Drehzahl und/oder Drehmoment der elektrischen Maschine begrenzten Betriebsbereich betrieben wird. Dabei ist vorgesehen, dass der Betriebsbereich auf einen für die elektrische Maschine optimierten Betriebsbereich begrenzt wird und Betriebspunkte außerhalb des optimierten Betriebsbereichs für nur einen begrenzten Zeitraum angefahren werden.

Aus der EP 2 438 808 A1 ist ein Arbeitsgerät mit einem elektrischen Antriebsmotor bekannt. Diese Offenbarung betrifft eine handgeführte elektrische Motorkettensäge, deren elektrischer Antriebsmotor eine motorspezifische Kennlinie des aufgenommenen Motorstroms über der Drehzahl des Motors aufweist. Eine Steuereinheit steuert den durch den elektrischen Antriebsmotor fließenden Strom unterhalb einer Eingriffsdrehzahl auf Werte, die unterhalb der motorspezifischen Kennlinie liegen. Um in einem Arbeitsbereich der Motorkettensäge in einem vorgegebenen Drehzahlband einen für den Benutzer fühlbaren Betriebspunkt auszubilden ist vorgesehen, oberhalb der Eingriffsdrehzahl eine Steuerkennlinie der elektrischen Eingangsleistung des elektrischen Antriebsmotors über der Drehzahl vorzugeben, nach der die Eingangsleistung in dem vorgegebenen Drehzahlband auf eine etwa gleiche mittlere Leistung derart reduziert ist, dass in dem vorgegebenen Drehzahlband bei sinkender Drehzahl das Drehmoment des Antriebsmotors ansteigt.

Aus der US 2011/279074 A1 sind Systeme und Methoden zur Schätzung der Statorwicklungstemperatur von Elektromotoren bekannt. Dabei umfasst Elektromotorsystem einen Elektromotor, der einen Stator mit Wicklungen und einen Rotor umfasst, der für den Betrieb mit Motorgeschwindigkeit konfiguriert ist; ein Kühlsystem, das Kühlmittel umfasst, das zum Kühlen des Rotors und des Stators konfiguriert ist, wobei das Kühlmittel eine Kühlmitteldurchflussrate und eine Kühlmitteltemperatur aufweist; ein Wechselrichtermodul, das mit dem Elektromotor gekoppelt und so konfiguriert ist, dass es auf der Grundlage von Wechselrichtersteuersignalen Strom an die Wicklungen liefert; einen stromgeregelten Drehmomentregler, der mit dem Wechselrichtermodul gekoppelt und so konfiguriert ist, dass er als Reaktion auf einen reduzierten Drehmomentbefehl die Wechsel-

richtersteuersignale erzeugt; und einen Temperatur-schätzregler, der mit dem stromgeregelten Drehmomentregler gekoppelt und so konfiguriert ist, dass er den reduzierten Drehmomentbefehl basierend auf einem anfänglichen Drehmomentbefehl und einer geschätzten Statorwicklungstemperatur erzeugt. Der Temperaturschätzregler ist so konfiguriert, dass er die geschätzte Statorwicklungstemperatur basierend auf der Motordrehzahl und der Kühlmitteldurchflussrate schätzt.

Der Erfindung liegt die Aufgabe zugrunde den Schutz einer elektrischen Maschine vor thermischer Überlastung zu verbessern.

Diese Aufgabe wird durch ein Verfahren mit den Merkmalen des Anspruchs 1 gelöst. Ferner wird diese Aufgabe durch einen Stromrichter mit einer Regelvorrichtung, eingerichtet zur Regelung einer elektrischen Maschine mittels eines derartigen Verfahrens gelöst. Die Aufgabe wird weiter durch einen elektrischen Antrieb aufweisend einen derartigen Stromrichter und eine elektrische Maschine, insbesondere eine permanenterregte Synchronmaschine gelöst.

Weitere vorteilhafte Ausgestaltungen der Erfindung sind in den abhängigen Ansprüchen genannt.

Der Erfindung liegt unter anderem die Erkenntnis zugrunde, dass sich der Schutz vor thermischer Überlastung auf besonders einfache Weise sichergestellt wird, wenn dem Drehzahl-/Drehmomentkennlinienfeld für den Stillstand, also Drehzahl n=0, ein erstes maximal zulässiges Drehmoment entnommen wird und für die Nenndrehzahl $n_n$ ein zweites maximal zulässiges Drehmoment entnommen wird. Über die Beziehung

$$M = k_T \cdot I$$

wird für den ersten zulässigen Drehmomentwerten ein erster Stromgrenzwert $I_1$ bestimmt und für den zweiten zulässigen Drehmomentwert ein zweiter Stromgrenz-wert $I_2$ bestimmt. Auf diese Werte wird der Strom der elektrischen Maschine für den Stillstand und für die Nenndrehzahl $n_n$ beschränkt. Für die Werte zwischen Stillstand und Nenndrehzahl wird der Wert der Begrenzung in Abhängigkeit von der Motordrehzahl linear interpoliert. Mit anderen Worten wird in der Drehzahl-/Drehmomentkennlinie eine Gerade gebildet, die durch den ersten und den zweiten Stromgrenzwert verläuft. Die Werte dieser Geraden stellen den Stromgrenzwert für die entsprechende Motordrehzahl zwischen Stillstand und Nenndrehzahl dar. Mathematisch bestimmt sich der Stromgrenzwert $I_{GW}$ durch die lineare Interpolation in Abhängigkeit von der Motordrehzahl n zu

$$I_{GW,1} = I_1 - \frac{n}{n_n}(I_1 - I_2).$$

Es hat sich gezeigt, dass jeweilige Stromgrenzwert in Abhängigkeit von der Drehzahl durch die lineare Interpolation, bzw. durch die Bildung einer Geraden in der Kennlinie, auf besonders einfache Weise auch in Echtzeit leicht berechnet werden kann. Somit zeichnet sich diese technische Lösung dadurch aus, dass sie besonders einfach realisierbar ist und einen zuverlässigen Schutz bietet.

Zudem kann auf die Verwendung von Temperatursensoren verzichtet werden. Im Motor angebrachte Temperatursensoren sind hohen mechanischen und thermischen Belastungen ausgesetzt. Dadurch unterliegen sie oftmals einer hohen Ausfallrate und/oder sind teuer. Ein Austausch defekter Sensoren ist aufwendig und daher nicht nur teuer, sondern auch mit einer hohen Ausfallzeit der elektrischen Maschine verbunden.

Das vorgeschlagene Verfahren kommt auch ohne Temperatursensoren aus. Optional kann das vorgeschlagene Verfahren auch mit einem oder mehreren Temperatursensoren durchgeführt werden. Die elektrische Maschine ist daher temperatursensorfrei. Der Schutz der elektrischen Maschine kann gleichzeitig bei höherer Verfügbarkeit der Maschine zuverlässig realisiert werden.

Der besondere Vorteil der Erfindung liegt in der einfachen, und kostengünstigen Realisierbarkeit der Schutzfunktion vor einer thermischen Überlastung. Dabei ist diese Überwachung nicht nur ressourcenschonend in Bezug auf die benötigte Rechenleistung, sondern stellt gleichzeitig einen zuverlässigen und robusten Schutz der elektrischen Maschine vor thermischer Überlastung dar.

Dabei wird der Motorstrom in Abhängigkeit von der Motordrehzahl für Werte oberhalb der Nenndrehzahl auf einen Wert einer zweiten Geraden begrenzt, wobei die zweite Gerade als Funktion von der Motordrehzahl durch den zweiten Stromgrenzwert verläuft und bei Maximaldrehzahl der elektrischen Maschine den Wert null annimmt. Dies entspricht einer linearen Interpolation der Begrenzung zwischen der Nenndrehzahl $n_n$ und der Maximaldrehzahl $n_{max}$. Es hat sich gezeigt, dass sich das thermische Verhalten der elektrischen Maschine oberhalb der Nenndrehzahl ändert. Daher hat es sich als vorteilhaft erwiesen, für den thermischen Schutz in diesem Drehzahlbereich eine zweite Gerade anzuwenden, deren Steigung sich von der ersten Geraden unterscheidet. Der Stromgrenzwert, der sich dann durch diese zweite Gerade ergibt, bestimmt sich durch die lineare Interpolation zu

$$I_{GW,2} = I_2 \cdot \frac{n_{max}-n}{n_{max}-n_n}.$$

Der thermische Schutz ist durch die Verwendung der zweiten Gerade deutlich besser und schütz die elektrische Maschine zuverlässig vor Überlastung.

Bei einer vorteilhaften Ausgestaltung der Erfindung hängen der erste Stromgrenzwert und/oder der zweite Stromgrenzwert von der zulässigen Temperaturerhöhung in der elektrischen Maschine ab. Abhängig von der zulässigen Temperaturerhöhung können unterschiedliche erste und zweite Stromgrenzwerte vorgegeben werden. Falls beispielsweise die verwendeten Materialien im Innern der elektrischen Maschine eine größere Temperaturerhöhung zulassen, können auch der erste und der zweite Stromgrenzwerte höhere Werte annehmen ohne die elektrische Maschine thermisch zu überlasten. Ebenso bestimmen die Umgebungsbedingungen am Einsatzort wie beispielsweise die Umgebungstemperatur die zulässige Temperaturerhöhung. Alternativ kann der Stromgrenzwert daher nicht nur in Abhängigkeit von der zulässigen Temperaturerhöhung angegeben werden, sondern auch von der Umgebungstemperatur. Da der Einfluss der Umgebungstemperatur sich nur träge auf die Lebensdauer auswirkt, hat es sich als vorteilhaft erwiesen, den Stromgrenzwert in Abhängigkeit von einer gemittelten Umgebungstemperatur, insbesondere in Abhängigkeit von einer über eine Stunde gemittelten Umgebungstemperatur anzugeben.

Bei einer weiteren vorteilhaften Ausgestaltung der Erfindung hängen der erste Stromgrenzwert und/oder der zweite Stromgrenzwert von der Betriebsart der elektrischen Maschine ab. Die Betriebsart der elektrischen Maschine wird in der IEC 60034-1 oder auch EN 60034-1, sowie in weiteren nationalen Normen definiert. Die Betriebsart, beispielsweise bezeichnet mit einem Kurzzeichen S1..S10, hat einen erheblichen Einfluss auf die Belastung und damit die Erwärmung der elektrischen Maschine. Gerade für den Fall, dass die elektrische Maschine temperatursensorfrei ausgeführt ist, kann durch die Berücksichtigung der Betriebsart die elektrische Maschine deutlich besser ausgenutzt werden. Durch das bekannte Belastungsprofil können Temperaturschwankungen beispielsweise mittels eines Temperaturmodells des Motors vorherbestimmt werden. Gleichzeitig wird durch die Strombegrenzung eine unzulässig hohe Erwärmung der elektrischen Maschine auch für den vorliegenden Belastungsfall zuverlässig vermieden.

Bei einer weiteren vorteilhaften Ausgestaltung der Erfindung wird der zweite Stromgrenzwert für eine Nenndrehzahl von 6000 /min vorgegeben. Eine Nenndrehzahl von 6000/min hat sich für eine Vielzahl von Anwendungen als vorteilhaft erwiesen. Darüber hinaus kann auch die Kühlung der elektrischen Maschine bis zu einer solchen Drehzahl auf einfache Weise, beispielsweise mittels eines Lüfters auf der Welle der elektrischen Maschine realisiert werden. Somit hat die sich ergebende erste Gerade eine nur geringe Steigung. Nimmt der zweite Stromgrenzwert einen Wert im Bereich von 60..70% des ersten Stromgrenzwertes an. Erst darüber fällt der Stromgrenzwert, definiert über die zweite Gerade stark ab. Dabei liegt die Maximaldrehzahl beispielsweise bei 10000/min oder sogar noch darunter.

Bei einer weiteren vorteilhaften Ausgestaltung der Erfindung wird die elektrische Maschine in der Betriebsart S1 Dauerbetrieb betrieben. Beim Dauerbetrieb ist die Erwärmung deutlich größer als bei einem Kurzzeitbetrieb, Aussetzbetrieb oder periodischen Betrieb.

Es hat sich gezeigt, dass für die Auslegung im Dauerbetrieb, die Leistungsfähigkeit in erster Linie durch das thermische Verhalten bestimmt wird. Um so wichtiger ist ein zuverlässiger Schutz vor einer thermischen Überlastung. Bei einem Kurzzeitbetrieb, Aussetzbetrieb oder auch periodischen Betrieb spielt das thermische Verhalten eine durchaus geringere Rolle. Die Leistungsfähigkeit wird dann vielmehr durch die maximal auftretenden Ströme, also den elektrischen Betriebsgrößen bestimmt.

Bei dem Dauerbetrieb erreicht die elektrische Maschine eine höhere Temperatur als bei den übrigen Betriebsarten. Somit sind der erste und der zweite Stromgrenzwert auch geringer als bei den übrigen Betriebsarten. Durch das zuverlässige Verfahren zum Schutz der elektrischen Maschine ergibt sich der Vorteil, die elektrische Maschine besser hinsichtlich des Stromes bzw. Drehmomentes ausnutzen zu können. Dadurch kann die elektrische Maschine besonders wirtschaftlich und gleichzeitig sicher betrieben werden.

Bei einer weiteren vorteilhaften Ausgestaltung der Erfindung wird die elektrische Maschine bei einer zulässigen Temperaturerhöhung von 100K betrieben. Die verwendeten Materialien sowie die Umgebungsbedingungen der elektrischen Maschine machen einen Betrieb der elektrischen Maschine bei einer Temperaturerhöhung von 100K besonders wirtschaftlich. Es hat sich gezeigt, dass diese Temperaturerhöhung durch das vorgeschlagene Verfahren auf besonders einfache Weise eingehalten werden kann. Selbst wenn es aufgrund von Ungenauigkeiten des Verfahrens zu einer nur bedingt genauen Reduzierung des zulässigen Stroms kommt, hat es sich gezeigt, dass sich diese Ungenauigkeiten gerade bei der zulässigen Temperaturerhöhung von 100K nicht zu einer Beeinträchtigung der Lebensdauer der elektrischen Maschine führt. Daher ist die Verwendung des vorgeschlagenen Verfahrens im Besonderen für elektrische Maschinen mit einer zulässigen Temperaturerhöhung von 100K vorteilhaft.

Bei einer weiteren vorteilhaften Ausgestaltung der Erfindung ist die elektrische Maschine als permanenterregte Synchronmaschine oder Reluktanzmaschine ausgebildet. Es hat sich gezeigt, dass eine Überwachung der Temperatur gerade für eine Synchronmaschinen und eine Reluktanzmaschine besonders vorteilhaft ist.

Im Folgenden wird die Erfindung anhand der in den Figuren dargestellten Ausführungsbeispiele näher beschrieben und erläutert. Es zeigen:

FIG 1    einen elektrischen Antrieb

FIG 2    eine Drehzahl-/Drehmomentkennlinie und

FIG 3    eine Kennlinie mit Stromgrenzwerten

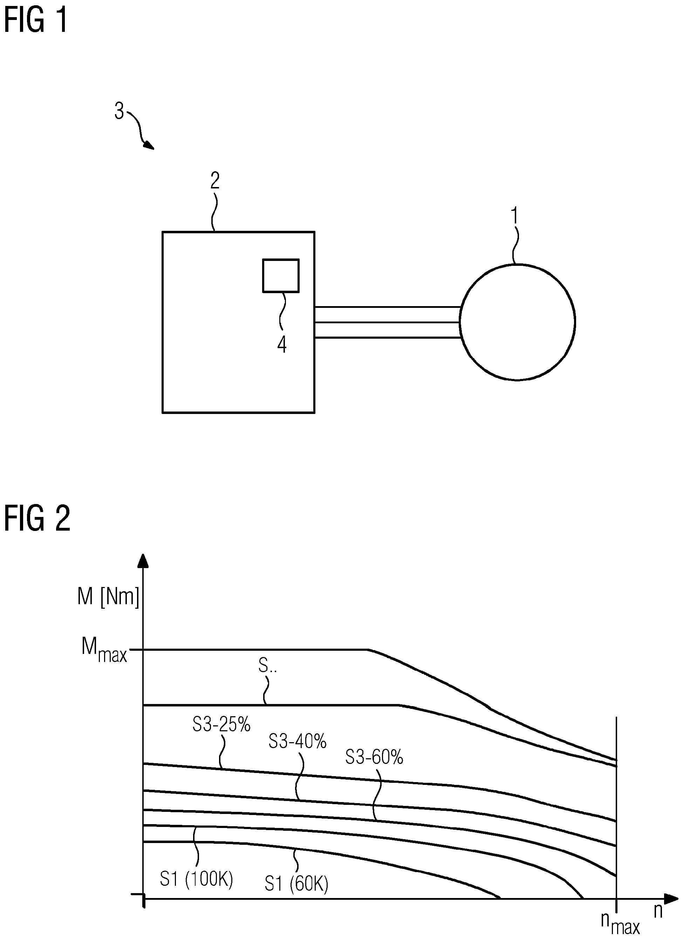

Die FIG 1 zeigt einen elektrischen Antrieb 3. Dieser weist einen Stromrichter 2 auf, der eine elektrische Maschine 1 mit elektrischer Energie speist. Zur Regelung, Überwachung und zum Schutz, beispielsweise zum Schutz vor thermischer Überlastung, der elektrischen Maschine 1, dient eine Regelvorrichtung 4.

Die FIG 2 zeigt ein typisches Drehmoment-/Drehzahlkennlinie einer stromrichtergespeisten elektrischen Maschine 1. Zur Vermeidung von Wiederholungen wird auf die Beschreibung zu FIG 1 sowie auf die dort eingeführten Bezugzeichen verwiesen. Dort ist das zulässige Moment M in Abhängigkeit von der Drehzahl n der elektrischen Maschine 1 angegeben. Dabei ist das Maximalmoment $M_{max}$ das maximal an der Welle der elektrischen Maschine 1 zulässige Moment. Es ergibt sich typischerweise durch mechanische und/oder elektrische Begrenzungen im Aufbau der elektrischen Maschine 1.

Darunter sind Werte für zulässige Momente bei unterschiedlichen Betriebsarten der elektrischen Maschine 1 angegeben. Dabei handelt es sich beispielsweise um einen Dauerbetrieb mit 100K Temperaturerhöhung. Diese Betriebsart wird dann mit S1 (100K) bezeichnet. Allgenmein kann für jede Betriebsart der elektrischen Maschine 1 ein zulässiger Momentwert in Abhängigkeit von der Drehzahl angegeben werden. Dazu ist in der FIG 1 allgemein eine Kurve mit S bezeichnet. Für die unterschiedlichen Betriebsarten ergeben sich dann Scharen von zulässigen Drehmomenten.

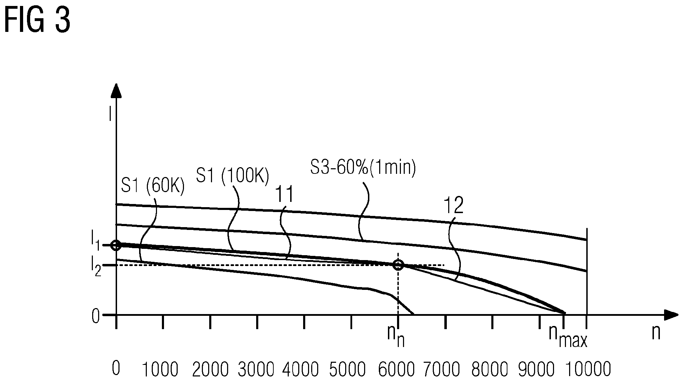

Die FIG 3 zeigt ein Diagramm, das den zulässigen Strom in Abhängigkeit von der Drehzahl angibt. Zur Vermeidung von Wiederholungen wird auf die Beschreibung zu den Figuren 1 und 2, sowie auf die dort eingeführten Bezugzeichen verwiesen. Für Strom und Drehmoment gilt in erster Näherung der lineare Zusammenhang

$$M = k_T \cdot I.$$

Somit lassen sich zulässige Ströme und zulässige Drehmomente auf einfache Weise mit hinreichender Genauigkeit ineinander umrechnen. Am Beispiel für den Dauerbetrieb S1 bei 100K Temperaturüberhöhung, bezeichnet als S1 (100K), sind der erste Stromgrenzwert $I_1$ bei Stillstand der elektrischen Maschine 1 und der zweite Stromgrenzwert $I_2$ bei einer Nenndrehzahl $n_n$ von 6000 /min angegeben. Die dazwischenliegenden Grenzwerte im Drehzahlbereich zwischen Stillstand und Nenndrehzahl werden linear interpoliert. Mit anderen Worten bilden diese Grenzwerte eine erste Gerade 11. Es ist zu erkennen, dass die in der Kennlinie dargestellte Stromgrenzwertlinie in etwas einer Geraden entspricht. Daraus ist zu erkennen, dass mittels der ersten Geraden 11 ein Schutz vor thermischer Überlastung sicher und zuverlässig realisierbar ist und gleichzeitig keine hohen Auslegungsreserven des elektrischen Antriebs 3 berücksichtigt. Für den Bereich oberhalb der Nenndrehzahl knicken die Stromgrenzwerte stark ab. Es hat sich als vorteilhaft erwiesen, diesen Bereich der Stromgrenzwerte durch eine zweite Gerade 12 zu beschreiben, die durch den zweiten Stromgrenzwert $I_1$ und bei der Maximaldrehzahl $n_{max}$ durch den Punkt null verläuft. Zwar ist die Abweichung in diesem Drehzahlbereich von der Kennlinienkurve größer, jedoch werden diese Punkte betrieblich weniger häufig angefahren. Somit sind die thermischen Auswirkungen, insbesondere auf die Lebensdauer der elektrischen Maschine 1 vernachlässigbar.

Zusammenfassend betrifft die Erfindung ein Verfahren zur Regelung einer elektrischen Maschine, wobei zur Verhinderung einer thermischen Überlastung der elektrischen Maschine der Motorstrom in Abhängigkeit von der Motordrehzahl der elektrischen Maschine begrenzt wird. Zur Verbesserung des Schutzes vor thermischer Überlastung wird vorgeschlagen, dass für den Stillstand der elektrischen Maschine ein erster Stromgrenzwert und für eine Nenndrehzahl der elektrischen Maschine ein zweiter Stromgrenzwert vorgegeben sind, wobei der Motorstrom in Abhängigkeit von der Motordrehzahl für Werte zwischen Stillstand und Nenndrehzahl auf einen Wert einer ersten Geraden begrenzt wird, wobei die erste Gerade als Funktion von der Motordrehzahl durch den ersten Stromgrenzwert und den zweiten Stromgrenzwert gebildet wird. Ferner betrifft die Erfindung einen Stromrichter mit einer Regelvorrichtung, eingerichtet zur Regelung einer elektrischen Maschine mittels eines derartigen Verfahrens. Die Erfindung betrifft weiter einen elektrischen Antrieb aufweisend einen derartigen Stromrichter und eine elektrische Maschine, insbesondere eine permanenterregte Synchronmaschine.

**Patentansprüche**

1. Verfahren zur Regelung einer elektrischen Maschine (1), wobei zur Verhinderung einer thermischen Überlastung der elektrischen Maschine (1) der Motorstrom in Abhängigkeit von der Motordrehzahl (n) der elektrischen Maschine (1) begrenzt wird, wobei für den Stillstand der elektrischen Maschine (1) ein erster Stromgrenzwert ($I_1$) und für eine Nenndrehzahl ($n_n$) der elektrischen Maschine (1) ein zweiter Stromgrenzwert ($I_2$) vorgegeben sind, wobei der Motorstrom in Abhängigkeit von der Motordrehzahl (n) für Werte zwischen Stillstand und Nenndrehzahl ($n_n$) auf einen Wert ($I_{GW,1}$) einer ersten Geraden (11) begrenzt wird, wobei die erste Gerade (11) als Funktion von der Motordrehzahl (n) durch den ersten Stromgrenzwert ($I_1$) und den zweiten Stromgrenzwert ($I_2$) gebildet wird, wobei der Motorstrom in Abhängigkeit von der Motordrehzahl (n) für Werte oberhalb der Nenndrehzahl ($n_n$) auf einen Wert ($I_{GW,2}$) einer zweiten Geraden (12) begrenzt wird, wobei die zweite Gerade (12) als Funktion von der Motordrehzahl (n) durch den zweiten Stromgrenzwert ($I_2$) verläuft und bei Maximaldrehzahl ($n_{max}$) der elektrischen Maschine (1) den Wert null annimmt.

2. Verfahren nach Anspruch 1, wobei der erste Stromgrenzwert ($I_1$) und/oder der zweite Stromgrenzwert ($I_2$) von der zulässigen Temperaturerhöhung in der elektrischen Maschine (1) abhängen.

3. Verfahren nach einem der Ansprüche 1 oder 2, wobei der erste Stromgrenzwert ($I_1$) und/oder der zweite Stromgrenzwert ($I_2$) von der Betriebsart der elektrischen Maschine (1) abhängen.

4. Verfahren nach einem der Ansprüche 1 bis 3, wobei der zweite Stromgrenzwert ($I_2$) für eine Nenndrehzahl ($n_n$) von 6000 /min vorgegeben wird.

5. Verfahren nach einem der Ansprüche 1 bis 4, wobei die elektrische Maschine (1) in der Betriebsart S1 Dauerbetrieb betrieben wird.

6. Verfahren nach Anspruch 5, wobei die elektrische Maschine (1) bei einer zulässigen Temperaturerhöhung von 100K betrieben wird.

7. Verfahren nach einem der Ansprüche 1 bis 6, wobei die elektrische Maschine (1) als permanenterregte Synchronmaschine oder Reluktanzmaschine ausgebildet ist.

8. Stromrichter (2) mit einer Regelvorrichtung (4), eingerichtet zur Regelung einer elektrischen Maschine (1) mittels eines Verfahrens nach einem der Ansprüche 1 bis 7.

9. Elektrischer Antrieb (3) aufweisend einen Stromrichter (2) nach Anspruch 8 und eine elektrische Maschine (1), insbesondere eine permanenterregte Synchronmaschine.

**Claims**

1. Method for regulating an electric machine (1), wherein to prevent a thermal overload of the electric machine (1) the motor current is limited in dependence upon the motor rotational speed (n) of the electric machine (1), wherein a first current limit value ($I_1$) is predefined for the electric machine (1) at a standstill and a second current limit value ($I_2$) is predefined for a rated rotational speed ($n_n$) of the electric machine (1), wherein the motor current is limited to a value ($I_{GW,1}$) of a first straight line (11) in dependence upon the motor rotational speed (n) for values between standstill and rated rotational speed ($n_n$), wherein the first straight line (11) is formed as a function of the motor rotational speed (n) by the first current limit value ($I_1$) and the second current limit value ($I_2$), wherein the motor current is limited to a value ($I_{GW,2}$) of a second straight line (12) in dependence upon the motor rotational speed (n) for values above the rated rotational speed ($n_n$), wherein the second straight line (12) runs as a function of the motor rotational speed (n) by way of the second current

limit value ($I_2$) and assumes the value of zero at maximum rotational speed ($n_{max}$) of the electric machine (1).

2. Method according to claim 1, wherein the first current limit value ($I_1$) and/or the second current limit value ($I_2$) depend upon the permissible temperature increase in the electric machine (1).

3. Method according to one of claims 1 or 2, wherein the first current limit value ($I_1$) and/or the second current limit value ($I_2$) depend upon the mode of operation of the electric machine (1).

4. Method according to one of claims 1 to 3, wherein the second current limit value ($I_2$) is predefined for a rated rotational speed ($n_n$) of 6000 per minute.

5. Method according to one of claims 1 to 4, wherein the electric machine (1) is operated in the mode of operation S1 continuous operation.

6. Method according to claim 5, wherein the electric machine (1) is operated with a permissible temperature increase of 100K.

7. Method according to one of claims 1 to 6, wherein the electric machine (1) is embodied as a permanently excited synchronous machine or reluctance machine.

8. Current converter (2) with a regulating apparatus (4), configured for regulating an electric machine (1) by means of a method according to one of claims 1 to 7.

9. Electric drive (3) having a current converter (2) according to claim 8 and an electric machine (1), in particular a permanently excited synchronous machine.

**Revendications**

1. Procédé de réglage d'une machine (1) électrique, dans lequel, pour empêcher une surcharge thermique de la machine (1) électrique, on limite le courant du moteur en fonction de la vitesse (n) de rotation du moteur de la machine (1) électrique, dans lequel, pour l'état d'arrêt de la machine (1) électrique, on prescrit une première valeur ($I_1$) limite du courant et, pour une vitesse ($n_n$) de rotation nominale de la machine (1) électrique, une deuxième valeur ($I_2$) limite du courant, dans lequel on limite le courant du moteur, en fonction de la vitesse (n) de rotation du moteur pour des valeurs comprises entre l'état d'arrêt et la vitesse ($n_n$) de rotation nominale, à une valeur ($I_{GW,1}$) d'une première droite (11), dans lequel on forme la première droite (11), comme fonction de la vitesse (n) de rotation du moteur, par la première valeur ($I_1$) limite du courant et par la deuxième valeur ($I_2$) du courant, dans lequel on limite le courant du moteur, en fonction de la vitesse (n) de rotation du moteur, pour des valeurs au-dessus de la vitesse ($n_n$) de rotation nominale à une valeur ($I_{GW,2}$) d'une deuxième droite (12), dans lequel la deuxième droite (12) passe, comme fonction de la vitesse (n) de rotation du moteur, par la deuxième valeur ($I_2$) limite du courant et prend, à la vitesse ($n_{max}$) de rotation maximum de la machine (1) électrique, la valeur zéro.

2. Procédé suivant la revendication 1, dans lequel la première valeur ($I_1$) limite du courant et/ou la deuxième valeur ($I_2$) limite du courant dépendent de l'élévation de température admissible dans la machine (1) électrique.

3. Procédé suivant l'une des revendications 1 ou 2, dans lequel la première valeur ($I_1$) limite du courant et/ou la deuxième valeur ($I_2$) limite du courant dépendent du type de fonctionnement de la machine (1) électrique.

4. Procédé suivant l'une des revendications 1 à 3, dans lequel on prescrit la deuxième valeur ($I_2$) limite du courant pour une vitesse ($n_n$) de rotation nominale de 6000/min.

5. Procédé suivant l'une des revendications 1 à 4, dans lequel on fait fonctionner la machine (1) électrique dans le type S1 de fonctionnement en fonctionnement permanent.

6. Procédé suivant la revendication 5, dans lequel on fait fonctionner la machine (1) électrique à une élévation de température admissible de 100K.

7. Procédé suivant l'une des revendications 1 à 6, dans lequel la machine (1) électrique est constituée sous la forme d'une machine synchrone à excitation permanente ou d'une machine à réluctance.

8. Convertisseur (2) ayant un dispositif (4) de réglage, agencé pour régler une machine (1) électrique au moyen d'un procédé suivant l'une des revendications 1 à 7.

9. Entraînement (3) électrique comportant un convertisseur (2) suivant la revendication 8 et une machine (1) électrique, en particulier une machine synchrone à excitation permanente.

FIG 1

FIG 2

FIG 3

S1 (60K)  S1 (100K)  11  S3-60%(1min)  12

$I_1$
$I_2$
0

0  1000  2000  3000  4000  5000  6000  7000  8000  9000  10000

$n_n$  $n_{max}$  n

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1935228 A1
- WO 2013098102 A2
- EP 2438808 A1
- US 2011279074 A1